(19) Europäisches Patentamt
European Patent Office
Office européen des brevets

(11) **EP 4 557 890 A1**

(12) **EUROPEAN PATENT APPLICATION**
published in accordance with Art. 153(4) EPC

(43) Date of publication:
**21.05.2025 Bulletin 2025/21**

(21) Application number: **23839328.4**

(22) Date of filing: **30.05.2023**

(51) International Patent Classification (IPC):
*H05B 6/72* (2006.01)      *H05B 6/64* (2006.01)
*H05B 6/74* (2006.01)

(52) Cooperative Patent Classification (CPC):
**A23L 5/15; A47J 27/004; H05B 6/64; H05B 6/72; H05B 6/74**

(86) International application number:
**PCT/JP2023/020122**

(87) International publication number:
**WO 2024/014151 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 JP 2022114013**

(71) Applicant: **Toyo Seikan Group Holdings, Ltd.**
**Shinagawa-ku**
**Tokyo 141-8627 (JP)**

(72) Inventors:
• **MARUYAMA, Tomoki**
  **Yokohama-shi, Kanagawa 240-0062 (JP)**
• **YAMADA, Shinji**
  **Yokohama-shi, Kanagawa 240-0062 (JP)**

(74) Representative: **Piticco, Lorena**
**Isler & Pedrazzini AG**
**Giesshübelstrasse 45**
**Postfach 1772**
**8027 Zürich (CH)**

(54) **MICROWAVE IRRADIATION DEVICE, MICROWAVE IRRADIATION METHOD, AND METHOD FOR MANUFACTURING FOOD**

(57)      A microwave irradiation device (1) includes: a retainer configured to retain an irradiated object at a retaining position; a power feed tool configured to electrically be conductive with an oscillator (10); a power feed antenna (40) configured to emit a microwave by power feed through conduction via the power feed tool, the power feed antenna (40) having directivity and being arranged with an irradiation axis facing the retaining position; and a parasitic antenna (50) that has directivity but is not fed with power, the parasitic antenna (50) being arranged to face the power feed antenna (40) across the retaining position and having an irradiation axis facing the retaining position.

FIG. 1

## Description

Technical Field

The present invention relates to a microwave irradiation device, a microwave irradiation method, and a method for manufacturing food.

Background Art

In general, a heating device that dielectrically heats an irradiated object by irradiating the irradiated object with microwaves is known. For efficient heating, impedance needs to be matched so that energy is input to the irradiated object. In a case of heating an irradiated object by irradiating the irradiated object with microwaves using a directional antenna without using a waveguide or the like, it is necessary to devise impedance matching. For example, in consideration of such impedance matching, Patent Document 1 discloses repeatedly bringing the irradiated object and the antenna close to or away from each other in order to improve heating efficiency in a microwave heating device. As an example of the movement distance at this time, a range of several mm is given.

The impedance matching disclosed in Patent Document 1 can also be said to be fine adjustment. In a case where impedance matching is performed by adjusting an output frequency of a microwave oscillator that generates a microwave to a resonance frequency of an irradiated object, in order to widen an output frequency range of a high-output oscillator, a frequency range that can be varied is limited due to restrictions on a frequency band of components, and a decrease in efficiency, an increase in size, and an increase in cost that accompany. For example, when the type or number of irradiated objects is changed or when the position of the irradiated object greatly changes, another impedance matching mechanism is required.

Citation List

Patent Literature

Patent Document 1: JP 2019-3868 A

Summary of Invention

Technical Problem

An external matcher for impedance matching may be connected to a device, thereby achieving impedance matching. In impedance matching using an external matcher, adjustment of the resonance frequency with the entire device as a load is performed, and therefore there is a case of achieving matching with not only the irradiated object but also other parts of the device.

An object of the present invention is to obtain good impedance matching with an irradiated object in microwave irradiation.

Solution to Problem

According to one aspect of the present invention, a microwave irradiation device includes: a retainer configured to retain an irradiated object at a retaining position; a power feed tool configured to be electrically conductive with an oscillator; a power feed antenna configured to emit a microwave by power feed through conduction via the power feed tool, the power feed antenna having directivity and being arranged with an irradiation axis facing the retaining position; and a parasitic antenna that has directivity but is not fed with power, the parasitic antenna being arranged to face the power feed antenna across the retaining position and having an irradiation axis facing the retaining position.

Advantageous Effects of Invention

According to the present invention, good impedance matching with an irradiated object is obtained in microwave irradiation.

Brief Description of Drawings

FIG. 1 is a view schematically illustrating an outline of a basic configuration example of a microwave irradiation device according to a first embodiment.
FIG. 2A is a view schematically illustrating a relationship between return loss and a frequency in a case where no parasitic antenna is present in FIG. 1.
FIG. 2B is a view schematically illustrating a relationship between return loss and a frequency in a case where a parasitic antenna is adjusted and provided at an appropriate position.
FIG. 3A is a view schematically illustrating an example in which one antenna is provided as a power feed antenna and one antenna is provided as a parasitic antenna.
FIG. 3B is a view schematically illustrating an example in which two antennas are provided as power feed antennas and one antenna is provided as a parasitic antenna.
FIG. 3C is a view schematically illustrating an example in which two antennas are provided as power feed antennas and two antennas are provided as parasitic antennas.
FIG. 4 is a view schematically illustrating a positional relationship among a first power feed loop antenna, a first parasitic loop antenna, and an irradiated object in Experimental Example 1.
FIG. 5 is a view illustrating values of a resonance frequency and return loss with respect to a distance from the first power feed loop antenna to the first parasitic loop antenna measured in Experimental Example 1.

FIG. 6 is a view schematically illustrating a positional relationship among the first power feed loop antenna, a second power feed loop antenna, the first parasitic loop antenna, and the irradiated object in Experimental Example 2.

FIG. 7 is a view illustrating a value of a resonance frequency with respect to a distance from the first power feed loop antenna to the first parasitic loop antenna measured in Experimental Example 2.

FIG. 8 is a view schematically illustrating a positional relationship among the first power feed loop antenna, the second power feed loop antenna, the first parasitic loop antenna, a second parasitic loop antenna, and the irradiated object in Experimental Example 3.

FIG. 9 is a view illustrating a value of a resonance frequency with respect to a distance from the power feed antenna to the parasitic antenna measured in Experimental Example 3.

FIG. 10 is a view schematically illustrating a positional relationship among the first power feed loop antenna, the second power feed loop antenna, and the irradiated object in a comparative experimental example.

FIG. 11 illustrates a value of a resonance frequency with respect to a distance between the first power feed loop antenna and the second power feed loop antenna measured in the comparative experimental example.

FIG. 12 is a view schematically illustrating a positional relationship among the first power feed antenna, the first parasitic antenna, and the irradiated object in Experimental Example 4.

FIG. 13 is a plan view schematically illustrating a basic configuration of a part of an example of a microwave irradiation device according to a second embodiment.

FIG. 14 is a view schematically illustrating an outline of a basic configuration example of a microwave irradiation device according to a third embodiment.

FIG. 15 is a view schematically illustrating an arrangement and the like of an antenna according to Experimental Example 5.

FIG. 16 is a view illustrating a value of a resonance frequency with respect to an interval and a length of two auxiliary antennas.

FIG. 17 is a view illustrating a simulation result of a temperature distribution of the irradiated object when the irradiated object is heated by the microwave irradiation device having each configuration.

FIG. 18 is a view illustrating a change in resonance frequency when one irradiated object is conveyed.

FIG. 19 is a view illustrating a change in resonance frequency when three irradiated objects are conveyed.

Description of Embodiments

First Embodiment

The first embodiment will be described with reference to the drawings. The present embodiment relates to a microwave irradiation device. The microwave irradiation device of the present embodiment is configured to irradiate an irradiated object with microwaves so as to internally heat the irradiated object. In particular, this microwave irradiation device uses a directional antenna and irradiates an irradiated object with microwaves with a directional irradiation axis of the directional antenna being directed to the irradiated object. The irradiated object is, though not limited to, a food, for example. Thus, this microwave irradiation device and a microwave irradiation method using the same can be used for manufacturing of food including packaged food, for example. The microwave irradiation device of the present embodiment has an excellent impedance matching function. In particular, appropriate impedance matching can be obtained by the same device even for various situations in which the type, number, position, and the like of the irradiated object greatly differ, and efficient heating can be achieved by the same device.

Basic Configuration of Microwave Irradiation Device

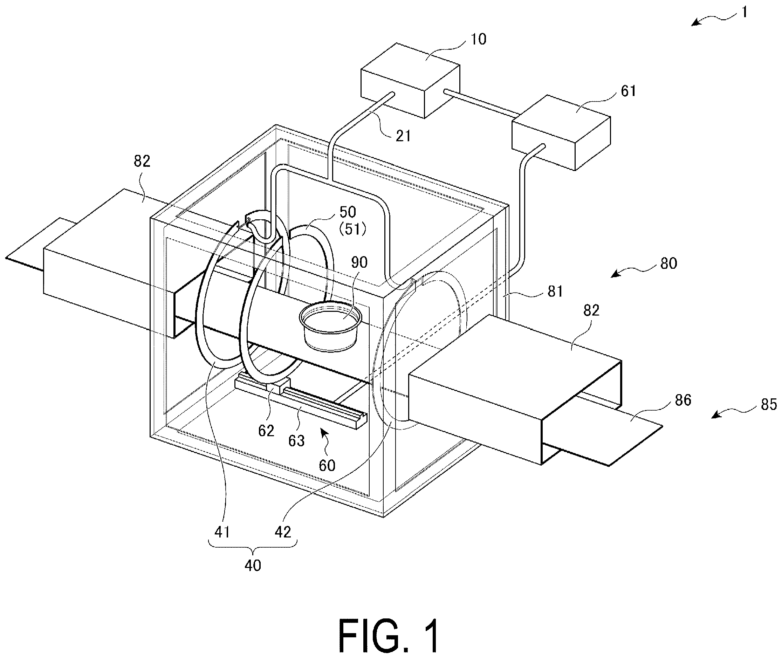

FIG. 1 is a view schematically illustrating an outline of a basic configuration example of a microwave irradiation device 1 according to the present embodiment. The microwave irradiation device 1 is configured to sequentially heat an irradiated object 90 that is conveyed by a conveyance device 85. The conveyance device 85 is, for example, a belt conveyor. The conveyance device 85 has a belt 86 that moves in its longitudinal direction. The irradiated object 90 is placed at a retaining position on the belt 86 and conveyed in the longitudinal direction of the belt 86. In this manner, in the present embodiment, the conveyance device 85 functions as a retainer that retains the irradiated object 90 at the retaining position.

The microwave irradiation device 1 includes a power feed antenna 40 configured to irradiate the irradiated object 90 conveyed by the conveyance device 85 with microwaves. The power feed antenna 40 is a directional antenna such as a loop antenna, for example. In the example illustrated in FIG. 1, the microwave irradiation device 1 includes two loop antennas as the power feed antenna 40, i.e., a first power feed loop antenna 41 and a second power feed loop antenna 42. The number of power feed loop antennas can be changed as appropriate.

The first power feed loop antenna 41 and the second power feed loop antenna 42 are formed of a metal member having a length corresponding to one wavelength of the microwave to be emitted, for example, and this metal member has an annular shape, for example. The metal member is not limited to an annular shape, and may have another ring shape such as a quadrangle.

Both ends of this metal member serve as a power feed point. For example, a coaxial cable 21 as a power feed tool is connected to this power feed point. A high-frequency power is fed from an oscillator 10 to the first power feed loop antenna 41 and the second power feed loop antenna 42 via this coaxial cable 21. By the power feeding, a current flows through the metal member as an element, and the first power feed loop antenna 41 and the second power feed loop antenna 42 radiate radio waves to form an electric field. In the loop antenna, the center of an opening surface formed by the metal member serves as an irradiation source of radio waves, and the opening surface serves as an irradiation surface to emit microwaves in both directions along an irradiation axis perpendicular to the opening surface.

The microwave irradiation device 1 is configured such that the irradiated object 90 is conveyed through the center of the opening surface, which is the irradiation surface of the first power feed loop antenna 41 and the second power feed loop antenna 42. Therefore, the belt 86 of the conveyance device 85 is provided so as to penetrate the opening surface of the first power feed loop antenna 41 and the second power feed loop antenna 42. The irradiation surfaces of the first power feed loop antenna 41 and the second power feed loop antenna 42 are arranged perpendicularly to the longitudinal direction of the belt 86, and directional irradiation axes of the first power feed loop antenna 41 and the second power feed loop antenna 42 are arranged parallel to the longitudinal direction of the belt 86. In the present embodiment, the directional irradiation axis of the power feed antenna 40 is called a reference axis.

The oscillator 10 outputs high-frequency power in accordance with the frequency of the microwave. The frequency is, though not limited to, for example, 450 MHz, 915 MHz, or 2.45 GHz. The output frequency of the oscillator 10 can be adjusted to some extent, but the range thereof is limited. In order to efficiently and appropriately heat the irradiated object 90, it is necessary to match the impedance of an oscillation system including the oscillator 10 and the power feed antenna 40 with the impedance of the irradiated object 90. That is, it is necessary to set the resonance frequency with the irradiated object 90 as a load within the range of an oscillatable frequency of the oscillator 10. The oscillator 10 or a device associated therewith has a function of monitoring reflected power.

The microwave irradiation device 1 includes a parasitic antenna 50 for the impedance matching described above. In the example illustrated in FIG. 1, the microwave irradiation device 1 includes, as the parasitic antenna 50, one loop antenna, i.e., a first parasitic loop antenna 51. The number of the parasitic loop antenna may be changed as appropriate.

The first parasitic loop antenna 51 has the same configuration as that of the first power feed loop antenna 41 and the like except that the coaxial cable 21 is not connected and it is not fed with power. That is, the first parasitic loop antenna 51 is formed of a metal member having a length corresponding to one wavelength of the microwave, and this metal member has an annular shape or the like. The first parasitic loop antenna 51 is not grounded. The first parasitic loop antenna 51 is provided such that the belt 86 of the conveyance device 85 passes through the opening surface so that the irradiated object 90 passes through the center of the opening surface of the first parasitic loop antenna 51. The first parasitic loop antenna 51 is provided perpendicularly to the longitudinal direction of the belt 86, i.e., perpendicularly to the above reference axis. Therefore, the irradiation axis of the first parasitic loop antenna 51 is provided along the reference axis.

The parasitic antenna 50 is installed movably along the reference axis. As described later, moving the parasitic antenna 50 along the reference axis changes the resonance frequency with the irradiated object 90 as a load of the microwave irradiation device 1. In the microwave irradiation device 1, the position of the parasitic antenna 50 is adjusted along the reference axis for impedance matching. In this manner, the position of the irradiated object 90 is changed by the conveyance device 85, and the parasitic antenna 50 moves along the reference axis, but the irradiation axes of the power feed antenna 40 and the parasitic antenna 50 are directed to the retaining position of the conveyance device 85 by which the irradiated object 90 is retained.

In order to adjust the position of the parasitic antenna 50, the microwave irradiation device 1 includes a position adjustment mechanism 60. In the example illustrated in FIG. 1, the position adjustment mechanism 60 includes a support portion 62 supporting the parasitic antenna 50, and a rail 63 supporting the support portion 62 movably along the reference axis. The position adjustment mechanism 60 includes a control unit 61 that controls the position of the support portion 62 on the rail 63. The control unit 61 is connected also to the oscillator 10, and acquires information on the return loss measured by the oscillator 10.

The configuration of the position adjustment mechanism 60 illustrated here is an example, and the position adjustment mechanism 60 may have any configuration as long as the position of the parasitic antenna 50 can be changed. For example, the position adjustment mechanism 60 need not be able to continuously change the position of the parasitic antenna 50. The position adjustment mechanism 60 may allow a user to manually adjust and fix the position of the parasitic antenna 50. The position adjustment mechanism 60 may be configured to be able to also change the position of the power feed antenna 40. That is, the position adjustment mechanism 60 may be any mechanism as long as the relative distance between the power feed antenna 40 and the parasitic antenna 50 can be changed. For example, the position adjustment mechanism 60 may be a fixture that can changeably fix the position of the power feed antenna 40 or the parasitic antenna 50. However, as the configuration of the position adjustment mechanism 60, it is more preferable that the position of the power feed antenna 40 is fixed and the position of the parasitic antenna 50 is changed.

The microwave irradiation device 1 includes a metal housing 80 for shielding microwaves. That is, the power feed antenna 40 and the parasitic antenna 50 are covered with the metal housing 80. The belt 86 of the conveyance device 85 passes through the metal housing 80. More specifically, the metal housing 80 includes a main housing 81. The power feed antenna 40 and the parasitic antenna 50 are arranged in the main housing 81. Both side surfaces of the main housing 81 are provided with through holes through which the belt 86 passes. A side housing 82 having a size allowing the belt 86 and the irradiated object 90 placed thereon to pass through is connected to each of these through holes.

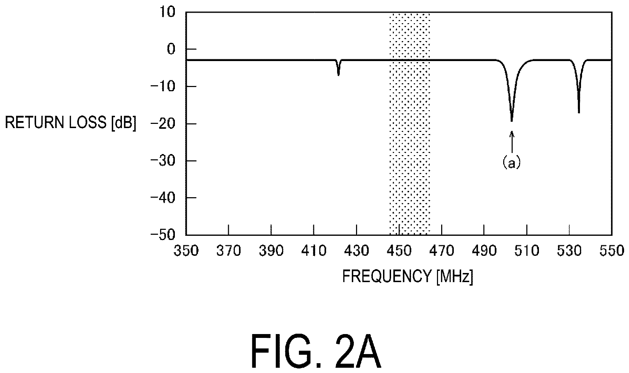

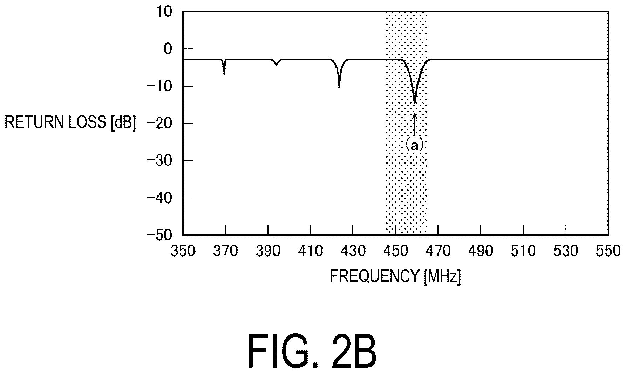

Impedance matching by the parasitic antenna 50 will be described with reference to FIGS. 2A and 2B. FIG. 2A schematically illustrates the relationship between the return loss and the frequency when the parasitic antenna 50 is not provided, i.e., when the parasitic antenna 50 is not present in FIG. 1. FIG. 2B schematically illustrates the relationship between the return loss and the frequency when the parasitic antenna 50 is adjusted and provided at an appropriate position. In general, such a relationship can be easily obtained by using a network analyzer or the like. Note that a range of 445 MHz to 465 MHz shaded in these drawings is assumed to be a frequency range that can be output by the oscillator 10.

In FIG. 2A, several peaks are observed. These peaks are resonance frequencies. Among these peaks, the peak indicated by (a) in the drawing is the resonance frequency related to the irradiated object 90. In FIG. 2A in which the parasitic antenna 50 is not provided, the resonance frequency related to the irradiated object 90 indicated by (a) is out of the shaded frequency range that can be output by the oscillator 10.

On the other hand, in FIG. 2B in which the parasitic antenna 50 is provided, the resonance frequency related to the irradiated object 90 indicated by (a) is within the shaded frequency range that can be output by the oscillator 10. If the resonance frequency with the irradiated object 90 as a load is within the frequency range that can be output by the oscillator 10, the output frequency can be matched to this resonance frequency by adjustment of the oscillator 10. In such a case, the irradiated object 90 can be efficiently heated.

Operation of Microwave Irradiation Device

The operation of the microwave irradiation device 1 of the present embodiment will be described. The high-frequency power output from the oscillator 10 is supplied to the power feed antenna 40 via the coaxial cable 21. The power feed antenna 40 radiates microwaves based on this power feed.

When the irradiated object 90 is changed or the like, adjustment of the position of the parasitic antenna 50 is performed for impedance matching in accordance with the irradiated object 90. At this time, in a state where the irradiated object 90 is arranged between the power feed antenna 40 and the parasitic antenna 50, irradiation with microwaves is performed, and return loss is monitored. The control unit 61 acquires the value of the return loss measured by the oscillator 10 or the like, and the position adjustment mechanism 60 adjusts the position of the parasitic antenna 50 so that the resonance frequency related to the irradiated object 90 falls within the range of the output frequency of the oscillator 10.

After impedance matching is performed, the microwave irradiation device 1 is used. That is, heating of the irradiated object 90 is performed using the microwave irradiation device 1. The irradiated object 90 is sequentially conveyed to a heating position between the power feed antenna 40 and the parasitic antenna 50 by the conveyance device 85, and the irradiated object 90 is sequentially dielectrically heated by the irradiation of the microwaves from the power feed antenna 40. The conveyance device 85 may be intermittently moved so that the irradiated object 90 stops at the heating position, or the conveyance device 85 may be continuously moved so that the irradiated object 90 passes through the heating position over a sufficient time.

Here, an example in which the operation related to impedance matching is performed before use of the microwave irradiation device 1 has been described, but no such limitation is intended. The operation related to impedance matching may be performed during use of the microwave irradiation device 1.

Configuration Example of Microwave Irradiation Device

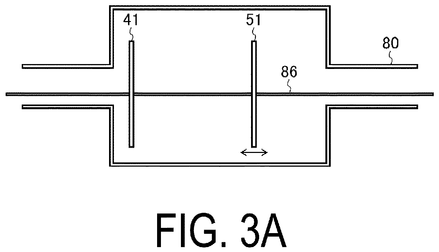

In the microwave irradiation device 1 described above, several patterns with different numbers of power feed antennas 40 and parasitic antennas 50 are conceivable. Although not limited to this, three examples are illustrated in FIGS. 3A to 3C.

The example illustrated in FIG. 3A is an example in which one antenna, i.e., the first power feed loop antenna 41 is provided as the power feed antenna 40, and one parasitic antenna, i.e., the first parasitic loop antenna 51 is provided as the parasitic antenna 50. The first parasitic loop antenna 51 is configured to be movable along the reference axis.

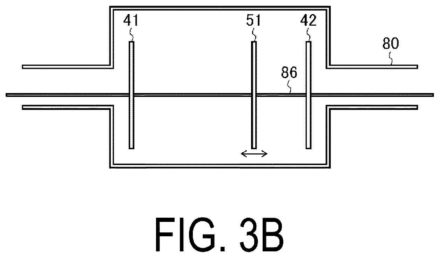

The example illustrated in FIG. 3B is an example in which two antennas, i.e., the first power feed loop antenna 41 and the second power feed loop antenna 42 are provided as the power feed antenna 40, and one parasitic antenna, i.e., the first parasitic loop antenna 51 is provided as the parasitic antenna 50. The first parasitic loop antenna 51 is arranged between the first power feed loop antenna 41 and the second power feed loop antenna 42. The first parasitic loop antenna 51 is configured to be movable between the first power feed loop antenna 41 and the second power feed loop antenna 42 along the reference axis.

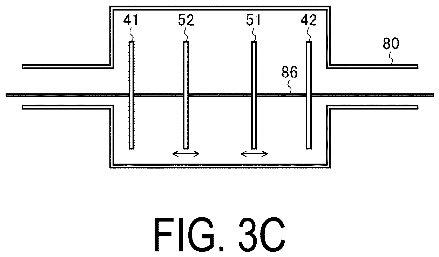

The example illustrated in FIG. 3C is an example in which two antennas, i.e., the first power feed loop antenna 41 and the second power feed loop antenna 42 are provided as the power feed antenna 40, and two parasitic antennas, i.e., the first parasitic loop antenna 51 and a second parasitic loop antenna 52 are provided as the parasitic antenna 50. The first parasitic loop antenna 51 and the second parasitic loop antenna 52 are arranged between the first power feed loop antenna 41 and the second power feed loop antenna 42. The first parasitic loop antenna 51 and the second parasitic loop antenna 52 are each configured to be movable between the first power feed loop antenna 41 and the second power feed loop antenna 42 along the reference axis.

As described later, in this example, the first power feed loop antenna 41 and the first parasitic loop antenna 51 form a pair, and the second power feed loop antenna 42 and the second parasitic loop antenna 52 form a pair. There is a positional relationship in which the first parasitic loop antenna 51 is arranged between the second power feed loop antenna 42 and the second parasitic loop antenna 52, and the second parasitic loop antenna 52 is arranged between the first power feed loop antenna 41 and the first parasitic loop antenna 51.

Experimental Example 1

Using the microwave irradiation device 1 having the configuration illustrated in FIG. 3A, i.e., using the microwave irradiation device 1 including the one first power feed loop antenna 41 and the one first parasitic loop antenna 51, the resonance frequency and the return loss with the irradiated object 90 as a load when the position of the first parasitic loop antenna 51 was changed were measured. The temperature when the irradiated object 90 was heated using the same device was measured.

Method

In the microwave irradiation device 1 of the test device, the main housing 81 was formed of an aluminum material, and had dimensions of 440 mm in length along the conveyance direction, 350 mm in width orthogonal to the conveyance direction, and 400 mm in height. Each side housing 82 was formed of an aluminum material, and had dimensions of 250 mm in length, 220 mm in width, and 80 mm in height. The belt 86 made of resin of the conveyance device 85 was provided so as to pass through in the metal housing 80, and its width was 150 mm.

In the main housing 81, the first power feed loop antenna 41 having a circular shape was provided so that the belt 86 penetrated therethrough. The first power feed loop antenna 41 was formed of an aluminum material, and had an inner diameter of 232 mm, an outer diameter of 258 mm, and a thickness of 2 mm. The oscillator 10 was connected to the first power feed loop antenna 41 via the coaxial cable 21. The frequency of output power of the oscillator 10 was 450 MHz (output wavelength λ = 666 mm).

Similarly to the first power feed loop antenna 41, the first parasitic loop antenna 51 having a circular shape was provided in the main housing 81 so that the belt 86 penetrated therethrough. The first parasitic loop antenna 51 was formed of an aluminum material, and had an inner diameter of 232 mm, an outer diameter of 258 mm, and a thickness of 2 mm.

The irradiated object 90 was a cup made of polypropylene (PP) having a diameter of 85 mm and filled with 140 g of potato salad. The irradiated object 90 was arranged on the belt 86 so that the distance from the first power feed loop antenna 41 was 167 mm (λ/4).

The resonance frequency and the return loss were measured using a network analyzer. Here, return loss RL was defined as follows.

$$RL = 20 \log_{10}(b_1/a_1)$$

Here, $a_1$ is a square root of input power, and $b_1$ is a square root of reflected power.

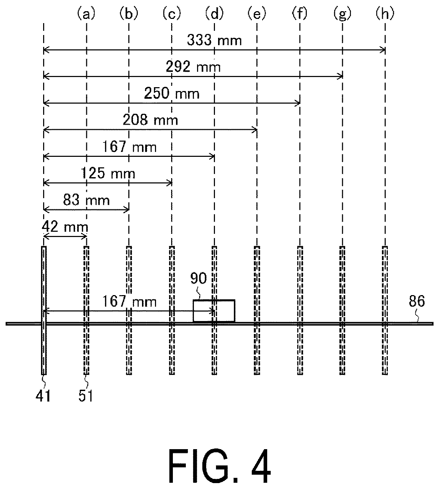

FIG. 4 schematically illustrates the positional relationship among the first power feed loop antenna 41, the first parasitic loop antenna 51, and the irradiated object 90 described above. Measurement was performed under each condition that the distance between the first parasitic loop antenna 51 and the first power feed loop antenna 41 was 42 mm, 83 mm, 125 mm, 167 mm, 208 mm, 250 mm, 292 mm, and 333 mm. That is, the measurement was performed by arranging the first parasitic loop antenna 51 at each of positions (a) to (h) indicated by broken lines in FIG. 4.

In a temperature measurement experiment of the irradiated object 90, the initial temperature of the irradiated object 90 was set to 10°C, output was set to 150 W, and the temperature after heating for 5 minutes was measured.

Results

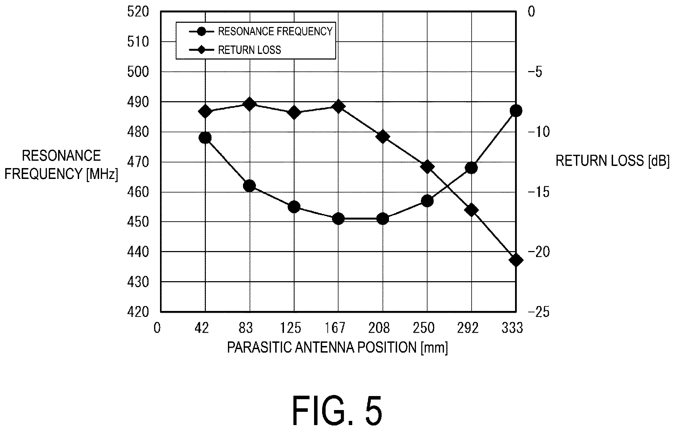

FIG. 5 illustrates values of the resonance frequency and the return loss with respect to the distance from the first power feed loop antenna 41 to the first parasitic loop antenna 51. The resonance frequency was the lowest at 451 MHz when the distance from the first parasitic loop antenna 51 to the first power feed loop antenna 41 was 167 mm and 208 mm. When the distance from the first parasitic loop antenna 51 to the first power feed loop antenna 41 was from 167 mm to 42 mm, the smaller the distance was, the higher the resonance frequency was. When the distance from the first parasitic loop antenna 51 to the first power feed loop antenna 41 was from 208 mm to 333 mm, the larger the distance was, the higher the resonance frequency was. The return loss was substantially constant when the distance from the first parasitic loop antenna 51 to the first power feed loop antenna 41 was 167 mm or less, and decreased as the distance was longer when the distance was 167 mm to 333 mm.

Note that since the irradiated object 90 is arranged at the position where the distance from the first power feed loop antenna 41 to the first parasitic loop antenna 51 is 167 mm, when the distance from the first power feed loop antenna 41 to the first parasitic loop antenna 51 is smaller than 167 mm, the irradiated object 90 is arranged outside between the two antennas of the first power feed loop antenna 41 and the first parasitic loop antenna 51. When the distance from the first power feed loop antenna 41 to the first parasitic loop antenna 51 is larger than 167 mm, the irradiated object 90 is arranged inside between the two antennas of the first power feed loop antenna 41 and the first parasitic loop antenna 51.

Temperature measurement of the irradiated object 90 after heating was performed for the case where the resonance frequency was 455 MHz, which is the median value of 445 MHz to 465 MHz that is the frequency range that can be output by the oscillator 10. That is, the temperature of the irradiated object 90 after heating was measured for the cases where the distance from the first power feed loop antenna 41 to the first parasitic loop antenna 51 was 125 mm and 241 mm. The return loss was -8 dB when the distance between the antennas was 125 mm, and the return loss was -12 dB when the distance between the antennas was 241 mm. The temperature after the irradiated object 90 having an initial temperature of 10°C was heated at 150 W for 5 minutes was 32°C when the distance between the antennas was 125 mm and 74°C when the distance between the antennas was 241 mm. From this, it has been considered that when the irradiated object 90 is arranged between the power feed antenna 40 and the parasitic antenna 50 and impedance matching is performed by matching the resonance frequencies, return loss is small and heating efficiency is improved.

Experimental Example 2

Using the microwave irradiation device 1 having the configuration illustrated in FIG. 3B, i.e., using the microwave irradiation device 1 including the two power feed antennas 40 of the first power feed loop antenna 41 and the second power feed loop antenna 42 and the one first parasitic loop antenna 51, the resonance frequency with the irradiated object 90 as a load when the position of the first parasitic loop antenna 51 was changed was measured.

Method

An experiment was conducted under the same conditions as in Experimental Example 1 except for the arrangement of the power feed antenna 40. That is, the configurations of the metal housing 80, the belt 86, and the like are the same as those in Experimental Example 1. The first power feed loop antenna 41 and the second power feed loop antenna 42 have the same configurations as those of the first power feed loop antenna 41 of Experimental Example 1. The first parasitic loop antenna 51 has the same configuration as that of the first parasitic loop antenna 51 of Experimental Example 1.

An interval between the first power feed loop antenna 41 and the second power feed loop antenna 42 was 333 mm. The oscillator 10 was connected to the first power feed loop antenna 41 and the second power feed loop antenna 42 via the coaxial cable 21. The frequency of the output power of the oscillator 10 was 450 MHz, and the first power feed loop antenna 41 and the second power feed loop antenna 42 were fed with power in phase.

The irradiated object 90 was a cup made of polypropylene (PP) having a diameter of 85 mm and filled with 140 g of potato salad similarly to Experimental Example 1. The irradiated object 90 was arranged on the belt 86 at the position midway between the first power feed loop antenna 41 and the second power feed loop antenna 42, i.e., so that the distance from each of the first power feed loop antenna 41 and the second power feed loop antenna 42 was 167 mm.

Measurement of the resonance frequency was performed under each condition that the distance between the first parasitic loop antenna 51 and the first power feed loop antenna 41 was 167 mm, 208 mm, 250 mm, and 292 mm. Measurement of the resonance frequency was performed under the same conditions except that the first parasitic loop antenna 51 was not arranged.

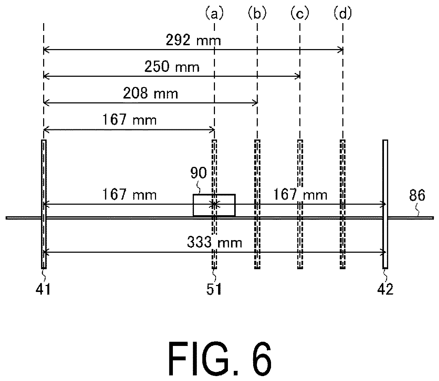

FIG. 6 schematically illustrates the positional relationship among the first power feed loop antenna 41, the second power feed loop antenna 42, the first parasitic loop antenna 51, and the irradiated object 90. The first parasitic loop antenna 51 was arranged at each of positions (a) to (d) indicated by broken lines. In Experimental Example 1, it has been found to be meaningful to consider the case where the irradiated object 90 is arranged between the power feed antenna 40 and the parasitic antenna 50. Therefore, the distance between the first parasitic loop antenna 51 and the power feed antenna 40 was defined as the distance between not the second power feed loop antenna 42 but the first power feed loop antenna 41 and the first parasitic loop antenna 51 so that the irradiated object 90 was brought into a state of being arranged between the power feed antenna 40 and the parasitic antenna 50.

Results

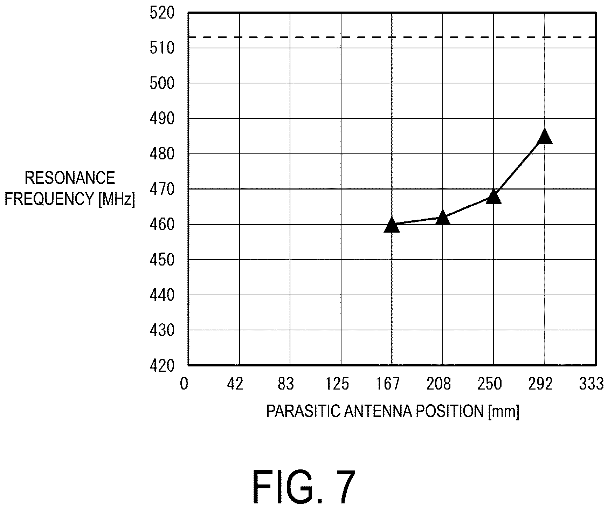

FIG. 7 illustrates a value of the resonance frequency with respect to the distance from the first power feed loop antenna 41 to the first parasitic loop antenna 51. When the first parasitic loop antenna 51 was not arranged, the resonance frequency was 513 MHz, and thus this value is indicated by a broken line in FIG. 7. The resonance frequency was lower in either case when the first parasitic loop antenna 51 was arranged than that when the first parasitic loop antenna 51 was not arranged.

The resonance frequency was the lowest at 460 MHz when the distance from the first parasitic loop antenna 51 to the first power feed loop antenna 41 was 167 mm. The larger the distance from the first parasitic loop antenna 51 to the first power feed loop antenna 41 was, the higher the resonance frequency was. This was a tendency similar to the result of Experimental Example 1.

If the first parasitic loop antenna 51 was not arranged, the resonance frequency was greatly deviated from the oscillatable frequency of 445 MHz to 465 MHz of the oscillator 10. However, it has become clear that the resonance frequency can be set within the range of the oscillatable frequency of the oscillator 10 by arranging the first parasitic loop antenna 51.

Experimental Example 3

Using the microwave irradiation device 1 having the configuration illustrated in FIG. 3C, i.e., using the microwave irradiation device 1 including the two power feed antennas 40 of the first power feed loop antenna 41 and the second power feed loop antenna 42 and the two parasitic antennas 50 of the first parasitic loop antenna 51 and the second parasitic loop antenna 52, the resonance frequency with the irradiated object 90 as a load when the position of the parasitic antenna 50 was changed was measured.

Method

An experiment was conducted under the same conditions as in Experimental Example 2 except for the arrangement of the parasitic antenna 50. That is, the configurations of the metal housing 80, the belt 86, and the like are the same as those in Experimental Example 2. The first power feed loop antenna 41 and the second power feed loop antenna 42 have the same configurations as those of the first power feed loop antenna 41 and the second power feed loop antenna 42 of Experimental Example 2. An interval between the first power feed loop antenna 41 and the second power feed loop antenna 42 was 333 mm. The first parasitic loop antenna 51 and the second parasitic loop antenna 52 have the same configurations as those of the first parasitic loop antenna 51 of Experimental Example 2.

The irradiated object 90 was a cup made of polypropylene (PP) having a diameter of 85 mm and filled with 140 g of potato salad similarly to Experimental Example 2. The irradiated object 90 was arranged on the belt 86 at the position midway between the first power feed loop antenna 41 and the second power feed loop antenna 42, i.e., so that the distance from each of the first power feed loop antenna 41 and the second power feed loop antenna 42 was 167 mm.

In Experimental Example 1, it has been found to be meaningful to consider the case where the irradiated object 90 is arranged between the power feed antenna 40 and the parasitic antenna 50. Then, the first power feed loop antenna 41 and the first parasitic loop antenna 51 arranged across the irradiated object 90 are considered as a pair, and the second power feed loop antenna 42 and the second parasitic loop antenna 52 arranged across the irradiated object 90 are considered as a pair. That is, there is a positional relationship that the first parasitic loop antenna 51 was arranged between the second power feed loop antenna 42 and the second parasitic loop antenna 52, and the second parasitic loop antenna 52 was arranged between the first power feed loop antenna 41 and the first parasitic loop antenna 51.

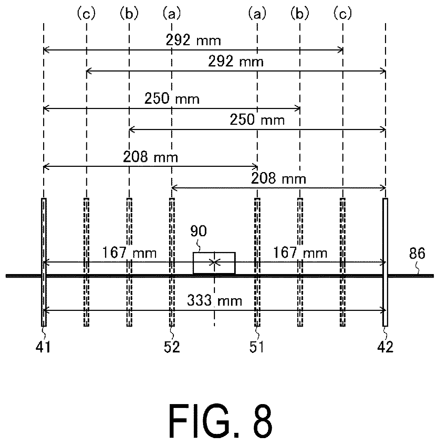

Measurement of the resonance frequency was performed under each condition that the distance between the first parasitic loop antenna 51 and the first power feed loop antenna 41 and the distance between the second parasitic loop antenna 52 and the second power feed loop antenna 42 were 208 mm, 250 mm, and 292 mm. FIG. 8 schematically illustrates the positional relationship among the first power feed loop antenna 41, the second power feed loop antenna 42, the first parasitic loop antenna 51, the second parasitic loop antenna 52, and the irradiated object 90. The first parasitic loop antenna 51 and the second parasitic loop antenna 52 were arranged at each of positions (a) to (c) indicated by broken lines. As described above, the distance between the parasitic antenna 50 and the power feed antenna 40 was defined so as to be in a state where the irradiated object 90 was arranged between the power feed antenna 40 and the parasitic antenna 50.

Results

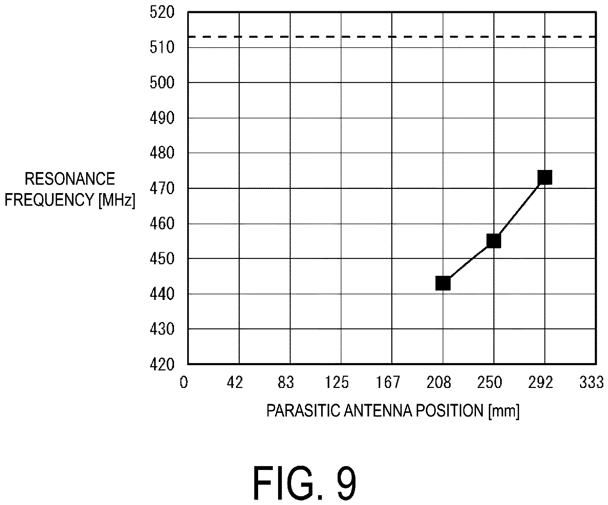

FIG. 9 illustrates a value of the resonance frequency with respect to the distance from the power feed antenna 40 to the parasitic antenna 50. When the parasitic antenna 50 was not arranged, the resonance frequency was 513 MHz, and thus this value is indicated by a broken line in FIG. 9. The resonance frequency was lower in either case when the parasitic antenna 50 was arranged than that when the parasitic antenna 50 was not arranged. The larger the distance from the power feed antenna 40 to the parasitic antenna 50 was, the higher the resonance frequency was. This was a tendency similar to the results of Experimental Example 1 and Experimental Example 2. However, even if the distance from the power feed antenna 40 to the parasitic antenna 50 was the same, the resonance frequency was lower in Experimental Example 3 in which two parasitic loop antennas were arranged than in Experimental Example 2 in which one parasitic loop antenna was arranged. That is, adjustment of the resonance frequency was possible also by the number of parasitic antennas arranged.

If the first parasitic loop antenna 51 was not arranged, the resonance frequency was greatly deviated from the oscillatable frequency of 445 MHz to 465 MHz of the oscillator 10. However, it has become clear that the resonance frequency can be set within the range of the oscillatable frequency of the oscillator 10 by arranging the first parasitic loop antenna 51 and the second parasitic loop antenna 52.

Comparative Experimental Example

The resonance frequency with the irradiated object 90 as a load when the parasitic antenna 50 was not provided and the interval between the two power feed antennas 40 was changed was measured.

Method

An experiment was conducted under the same conditions as in Experimental Example 2 except that the parasitic antenna 50 was not arranged and the interval between the first power feed loop antenna 41 and the second power feed loop antenna 42 was changed. That is, the configurations of the metal housing 80, the belt 86, and the like are the same as those in Experimental Example 2. The first power feed loop antenna 41 and the second power feed loop antenna 42 have the same configurations as those of the first power feed loop antenna 41 and the second power feed loop antenna 42 of Experimental Example 2.

The irradiated object 90 was a cup made of polypropylene (PP) having a diameter of 85 mm and filled with 140 g of potato salad similarly to Experimental Example 2. The irradiated object 90 was arranged on the belt 86 so as to be at the position midway between the first power feed loop antenna 41 and the second power feed loop antenna 42.

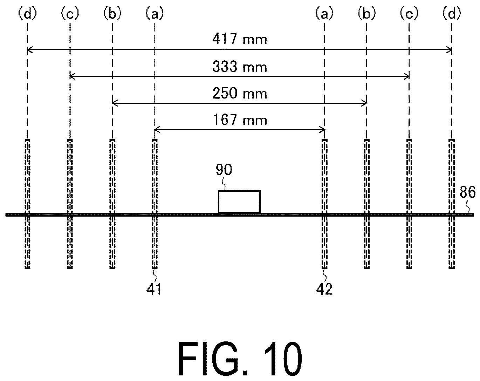

Measurement of the resonance frequency was performed under each condition that the distance between the first power feed loop antenna 41 and the second power feed loop antenna 42 was 167 mm, 250 mm, 333 mm, and 417 mm. FIG. 10 schematically illustrates the positional relationship among the first power feed loop antenna 41, the second power feed loop antenna 42, and the irradiated object 90. The first power feed loop antenna 41 and the second power feed loop antenna 42 were arranged at each of positions (a) to (d) indicated by broken lines.

Results

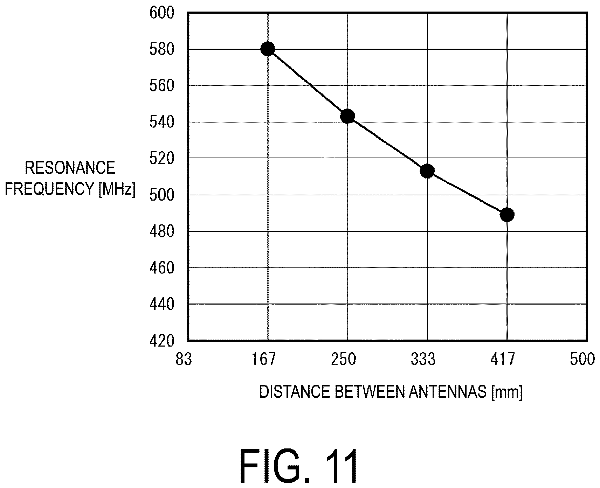

FIG. 11 illustrates a value of the resonance frequency with respect to the distance between the first power feed loop antenna 41 and the second power feed loop antenna 42. As the distance between the antennas increased, the resonance frequency decreased. It has become clear that the resonance frequency can be adjusted even if the distance between the first power feed loop antenna 41 and the second power feed loop antenna 42 is changed.

It is considered that the resonance frequency decreases when the distance between the antennas is increased because coupling between the antennas is weakened. In consideration of this, in the present embodiment, the reason for the resonance frequency to decrease by providing the parasitic antenna 50 is considered to be as follows. That is, a current in a reverse orientation to that of the power feed antenna 40 is induced in the parasitic antenna 50. It is considered that this induced current in the reverse orientation acts to weaken coupling between the power feed antennas 40 and coupling between the power feed antenna 40 and other elements. The results as in Experimental Examples 1 to 3 described above are considered to be because this action is stronger as the parasitic antenna 50 and the power feed antenna 40 are closer.

Although the resonance frequency can be adjusted by changing the distance between the first power feed loop antenna 41 and the second power feed loop antenna 42 without using the parasitic antenna 50, for this purpose, it is necessary to use the metal housing 80 that is large in order to greatly change the position of the antenna. Adjusting the positions of the first power feed loop antenna 41 and the second power feed loop antenna 42 to which the coaxial cable 21 is connected is more difficult than positioning the parasitic antenna 50 to which the coaxial cable 21 is not connected. Therefore, the present embodiment in which the resonance frequency can be adjusted by positioning the parasitic antenna 50 with the position of the power feed antenna 40 being fixed is considered to be excellent in terms of the size of the device, the simplicity of the device configuration, and the like.

Experimental Example 4

Using the microwave irradiation device 1 having the configuration illustrated in FIG. 3A, i.e., using the microwave irradiation device 1 including the one first power feed loop antenna 41 and the one first parasitic loop antenna 51, the relationship between the position of the irradiated object 90 at the time of performing impedance matching and the return loss at the time of heating of the irradiated object 90 was examined.

Method

The length along the conveyance direction of the main housing 81 of the microwave irradiation device 1 was 660 mm. The configurations of the side housing 82, the belt 86, and the like are the same as those in Experimental Example 1. The distance between the first power feed loop antenna 41 and the first parasitic loop antenna 51 was 333 mm. Other configurations of the microwave irradiation device 1 were similar to those of Experimental Example 1.

The irradiated object 90 was a cup made of polypropylene (PP) having a diameter of 85 mm and filled with 140 g of potato salad similarly to Experimental Example 1. Three irradiated objects 90 were arranged on the belt 86 at a pitch of 120 mm interval.

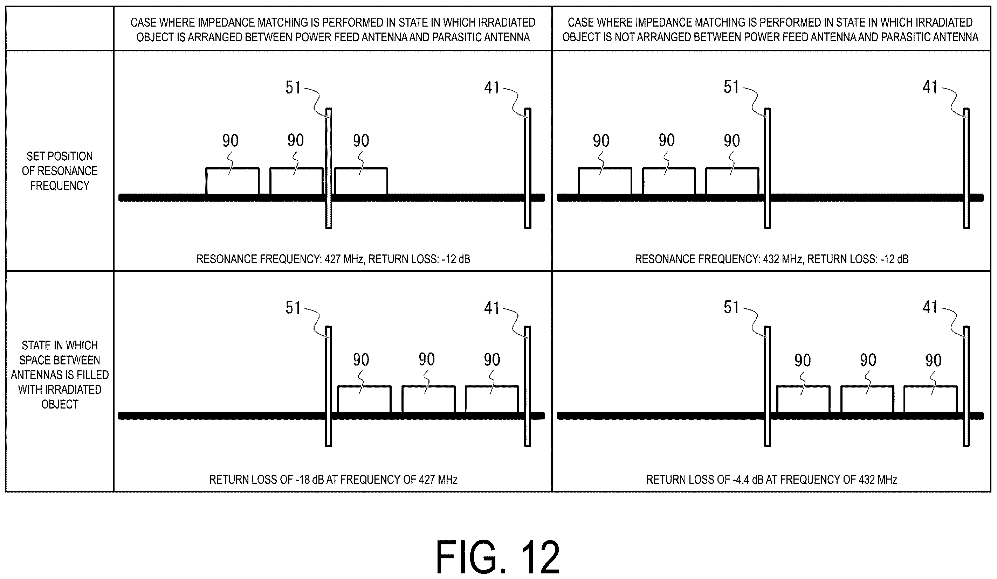

FIG. 12 schematically illustrates the positional relationship among the first power feed loop antenna 41, the first parasitic loop antenna 51, and the irradiated object 90. When impedance matching was performed in a state in which the irradiated object 90 was arranged between the first power feed loop antenna 41 and the first parasitic loop antenna 51, the resonance frequency and the return loss at that time were measured in a state illustrated in the upper left column of FIG. 12. That is, in a state where one of the three irradiated objects 90 was arranged between the first power feed loop antenna 41 and the first parasitic loop antenna 51, the resonance frequency was specified, and the return loss when the output frequency was set to the resonance frequency was measured. With the output frequency being fixed to the resonance frequency, as illustrated in the lower left column of FIG. 12, in a state where three irradiated objects 90 were arranged between the first power feed loop antenna 41 and the first parasitic loop antenna 51, the return loss at this time was measured.

When impedance matching is performed in a state where the irradiated object 90 is not arranged between the first power feed loop antenna 41 and the first parasitic loop antenna 51, the resonance frequency and the return loss at that time were measured in the state illustrated in the upper right column of FIG. 12. That is, the resonance frequency was specified in a state where the irradiated object 90 was arranged at a position 60 mm away from the first parasitic loop antenna 51 that is outside the first power feed loop antenna 41 and the first parasitic loop antenna 51, and the return loss when the output frequency was set to the resonance frequency was measured. With the output frequency being fixed to the resonance frequency, as illustrated in the lower right column of FIG. 12, in a state where three irradiated objects 90 were arranged between the first power feed loop antenna 41 and the first parasitic loop antenna 51, the return loss at this time was measured.

Results

As illustrated in the upper left column of FIG. 12, when impedance matching was performed in a state where one irradiated object 90 was arranged between the first power feed loop antenna 41 and the first parasitic loop antenna 51, the resonance frequency was 427 MHz, and the return loss at this time was -12 dB. The irradiated object 90 was conveyed with the output frequency being fixed to 427 MHz, and as illustrated in the lower left column of FIG. 12, three irradiated objects 90 were brought into a state of being arranged between the first power feed loop antenna 41 and the first parasitic loop antenna 51. At this time, the return loss was -18 dB, and a sufficiently small return loss was maintained.

As illustrated in the upper right column of FIG. 12, when impedance matching was performed in a state where the irradiated object 90 was not arranged between the first power feed loop antenna 41 and the first parasitic loop antenna 51, the resonance frequency was 432 MHz, and the return loss at this time was -12 dB. The irradiated object 90 was conveyed with the output frequency being fixed to 432 MHz, and as illustrated in the lower right column of FIG. 12, three irradiated objects 90 were arranged between the first power feed loop antenna 41 and the first parasitic loop antenna 51. At this time, the return loss was -4.4 dB, which was in a state where the return loss was large, and the efficiency was poor.

From this result, it has become clear that particularly in a case where the irradiated object 90 is conveyed and heated with the output frequency of the microwave fixed, efficient heating with small return loss can be performed by performing impedance matching in a state where the irradiated object 90 is arranged between the first power feed loop antenna 41 and the first parasitic loop antenna 51.

Second Embodiment

Various embodiments will be described as the second embodiment. Here, differences from the first embodiment will be described, and the same parts will be denoted by the same reference signs, and the description thereof will be omitted. In the first embodiment, the belt 86 of the conveyance device 85 is provided so as to penetrate the power feed antenna 40 and the parasitic antenna 50, but no such limitation is intended.

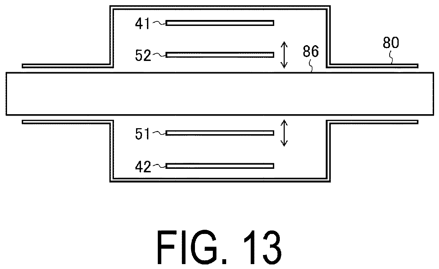

For example, the reference axis and the longitudinal direction of the belt 86 may be orthogonal to each other. FIG. 13 is a plan view schematically illustrating this example. In this example, the first power feed loop antenna 41 and the second power feed loop antenna 42 are arranged across the belt 86, and the first parasitic loop antenna 51 and the second parasitic loop antenna 52 are arranged across the belt 86 between the first power feed loop antenna 41 and the second power feed loop antenna 42. The first parasitic loop antenna 51 and the second parasitic loop antenna 52 are configured to be movable so as to change the interval therebetween.

Only any one of the first parasitic loop antenna 51 and the second parasitic loop antenna 52 may be provided. Only the first power feed loop antenna 41 and the first parasitic loop antenna 51 may be provided.

A plurality of sets of configurations including the first power feed loop antenna 41, the second power feed loop antenna 42, the first parasitic loop antenna 51, and the second parasitic loop antenna 52 may be arranged along the belt 86 as one set.

In these examples, the power feed antenna 40 is not limited to a loop antenna, and various directional antennas such as a microstrip antenna can be used.

Similarly, the parasitic antenna 50 is not limited to a loop antenna, and other antennas or various conductors functioning as antennas may be used. In these examples, since the position of the irradiated object 90 is changed by the conveyance device 85, the irradiation axes of the power feed antenna 40 and the parasitic antenna 50 are not always but at least temporarily directed to the retaining position of the conveyance device 85 where the irradiated object 90 is retained.

In the first embodiment and the second embodiment, an example in which the irradiated object 90 is conveyed by the conveyance device 85 has been described, but no such limitation is intended. In place of the conveyance device 85, a table on which the irradiated object 90 is placed on the reference axis may be provided. In this manner, in these embodiments, various retainers configured to retain the irradiated object 90 on the reference axis between the power feed antenna 40 and the parasitic antenna 50 even temporarily, such as the belt 86 of the conveyance device 85 and the table are used. That is, at least temporarily, the irradiation axes of the power feed antenna 40 and the parasitic antenna 50 are directed to the retaining position where the irradiated object 90 is retained.

Third Embodiment

The third embodiment will be described. Here, differences from the first embodiment will be described, and the same parts will be denoted by the same reference signs, and the description thereof will be omitted. In addition to the configuration of the first embodiment, still another parasitic antenna may be provided.

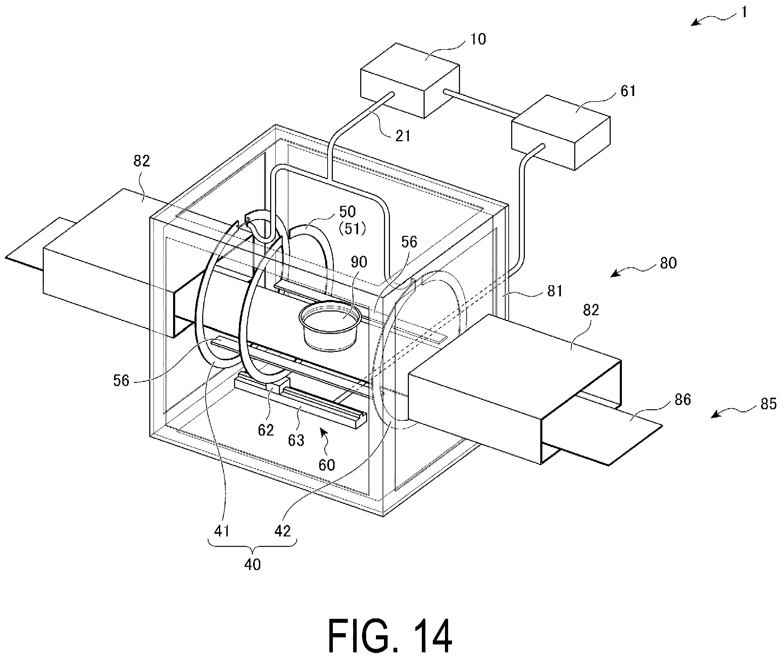

FIG. 14 is a view schematically illustrating an outline of a configuration example of the microwave irradiation device 1 according to the present embodiment. In this example, both sides of the belt 86 are provided with parasitic auxiliary antennas 56 having a plate shape elongated in parallel with the belt 86. The auxiliary antenna 56 is not grounded.

When power is supplied to the power feed antenna 40, a current is induced also to this auxiliary antenna 56. This induced current also affects the electric field around the irradiated object 90. The length, width, shape, number, arrangement, and the like of the auxiliary antenna 56 can be appropriately changed. The auxiliary antenna 56 may be fixed in position or movable. It is possible to adjust the state of the electric field around the irradiated object 90 using the auxiliary antenna 56. It is a matter of course that the present embodiment can be applied in combination with the second embodiment.

Experimental Example 5

The resonance frequency with the irradiated object 90 as a load when the parasitic antenna 50 was not provided, the two auxiliary antennas 56 were provided, and the interval between the auxiliary antennas 56 was changed was measured.

Method

The length along the conveyance direction of the main housing 81 of the microwave irradiation device 1 was 660 mm. The configurations of the side housing 82, the belt 86, and the like are the same as those in Experimental Example 2. An experiment was conducted under the same conditions as in Experimental Example 2 except that the parasitic antenna 50 was not arranged, the two auxiliary antennas 56 were arranged, and the interval between the auxiliary antennas 56 was changed.

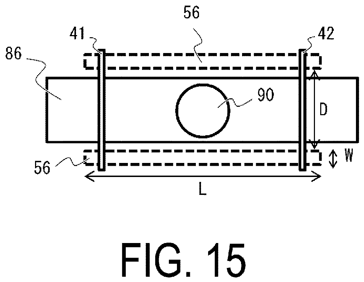

FIG. 15 is a view schematically illustrating the arrangement of antennas and the like. The distance between the first power feed loop antenna 41 and the second power feed loop antenna 42 was 333 mm. The irradiated object 90 was a cup made of polypropylene (PP) having a diameter of 85 mm and filled with 140 g of potato salad similarly to Experimental Example 2. The irradiated object 90 was arranged on the belt 86 so as to be at the position midway between the first power feed loop antenna 41 and the second power feed loop antenna 42.

The auxiliary antenna 56 had a width W of 20 mm and three types of lengths L of 320 mm, 400 mm, and 480 mm. The longitudinal axes of the two auxiliary antennas 56 were parallel to the irradiation axes of the first power feed loop antenna 41 and the second power feed loop antenna 42, and were arranged on both sides across the irradiated object 90. For each of the auxiliary antennas 56 having different lengths, measurement of the resonance frequency was performed under each condition with an interval D between the auxiliary antennas 56 varied from 90 mm to 150 mm.

Results

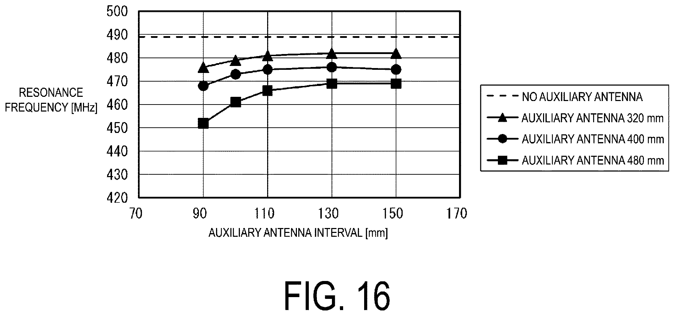

FIG. 16 illustrates a value of the resonance frequency with respect to the interval and the length of the two auxiliary antennas 56. When the auxiliary antenna 56 was not arranged, the resonance frequency was 489 MHz. This value is indicated by a broken line in FIG. 16. The resonance frequency was lower in either case when the auxiliary antenna 56 was arranged than that when the auxiliary antenna 56 was not arranged. As the interval between the auxiliary antennas 56 increased, the resonance frequency increased. As the length of the auxiliary antenna increased, the resonance frequency decreased.

It has been confirmed that the resonance frequency can be adjusted also by changing the interval or length of the auxiliary antenna 56 without using the parasitic antenna 50. However, the adjustment range of the interval between the auxiliary antennas 56 is restricted by the size of the irradiated object, and the change in length is complicated and discontinuous adjustment accompanied by component replacement.

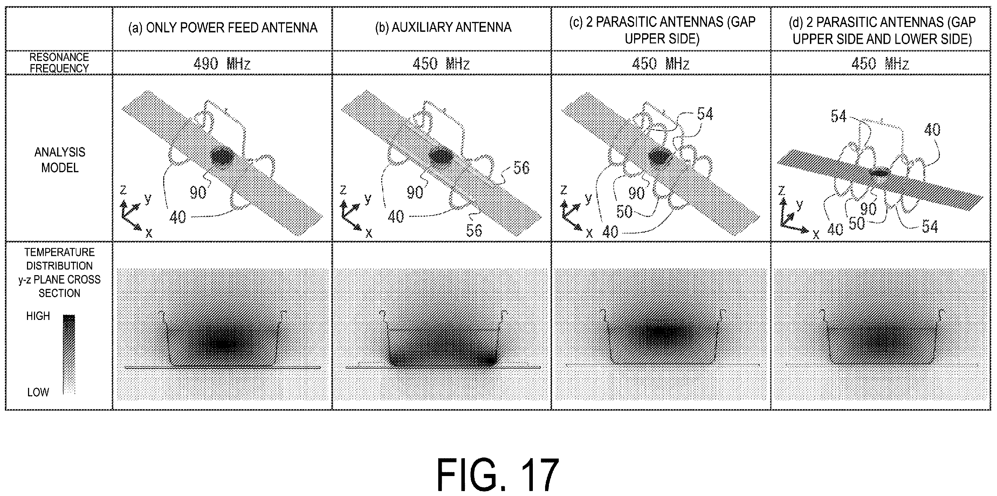

FIG. 17 illustrates a simulation result of the temperature distribution of the irradiated object 90 when the irradiated object 90 is heated by the above-described microwave irradiation device. In FIG. 17, the upper part illustrates a model used for analysis, and the lower part illustrates a temperature distribution that is an analysis result. (a) is a case where the parasitic antenna 50 and the auxiliary antenna 56 are not provided, and only the power feed antenna 40 is provided. (b) is a case where the parasitic antenna 50 is not provided and the auxiliary antenna 56 is provided. (c) and (d) are cases where the auxiliary antenna 56 is not provided and the parasitic antenna 50 is provided. Here, (c) is a case where the parasitic antenna 50 is arranged such that gaps 54 provided in the two parasitic antennas 50 are both on the upper side, and (d) is a case where one parasitic antenna 50 is arranged such that the gap 54 provided in the parasitic antenna 50 is on the upper side and the other is on the lower side.

In the case of using the auxiliary antenna 56 indicated by (b), the temperature distribution greatly changes as compared with the case of using only the power feed antenna 40 indicated by (a). It was suggested that providing the auxiliary antenna 56 to adjust the resonance frequency affects the temperature distribution. In the case of using the parasitic antenna 50 indicated by (c) and (d), the temperature distribution relatively similar to the case of only the power feed antenna 40 indicated by (a) was obtained. Therefore, it has been confirmed that the resonance frequency can be adjusted while suppressing the influence on the temperature distribution by using the parasitic antenna 50.

Comparison between (c) and (d) suggests that the temperature distribution in the case of using the plurality of parasitic antennas 50 is affected by the position of the gap 54 provided in the parasitic antenna 50. In the case of using the plurality of the parasitic antennas 50, by arranging the parasitic antennas 50 such that the respective gaps 54 are on the opposite sides, a temperature distribution closer to that in the case of only the power feed antenna 40 is obtained than that in the case of arranging the parasitic antennas 50 such that the gaps 54 are on the same side. It has been confirmed that by arranging the parasitic antenna 50 such that the gap 54 is on the opposite side, the resonance frequency can be adjusted without affecting the temperature distribution.

From the above, the method of adjusting the resonance frequency by positioning the parasitic antenna 50 is considered to be excellent in terms of simplicity of the device configuration, little influence on the temperature distribution, and the like.

Experimental Example 6

In each of the devices in which only the power feed antenna 40 was arranged and in which the auxiliary antenna 56 or the parasitic antenna 50 was arranged in addition to the power feed antenna 40, the change in the resonance frequency when the irradiated object 90 was conveyed was measured.

Method

The length along the conveyance direction of the main housing 81 of the microwave irradiation device 1 was 660 mm. The configurations of the side housing 82, the belt 86, and the like were the same as those in Experimental Example 2. The distance between the first power feed loop antenna 41 and the second power feed loop antenna 42 was 333 mm. When the power feed antenna 40 and the auxiliary antenna 56 were combined, the length of the auxiliary antenna was 480 mm, and the interval between the two auxiliary antennas was 150 mm. When the power feed antenna 40 and the parasitic antenna 50 were combined, one parasitic antenna 50 was arranged at the center at equal distances of the two power feed antennas 40.

The irradiated object 90 was a cup made of polypropylene (PP) having a diameter of 85 mm and filled with 140 g of potato salad similarly to Experimental Example 2. The one irradiated object 90 was arranged on the belt 86. Alternatively, three irradiated objects 90 were arranged on the belt 86 at a pitch of 120 mm interval. In a case of one irradiated object 90, the center thereof was the position of the irradiated object 90. In a case of three irradiated objects 90, the center of one at the center was the position of the irradiated object 90. The irradiated objects 90 was conveyed, and the resonance frequency of the position of the irradiated objects 90 was measured at each position 82.5 mm interval apart from the end position of main housing 81.

Results

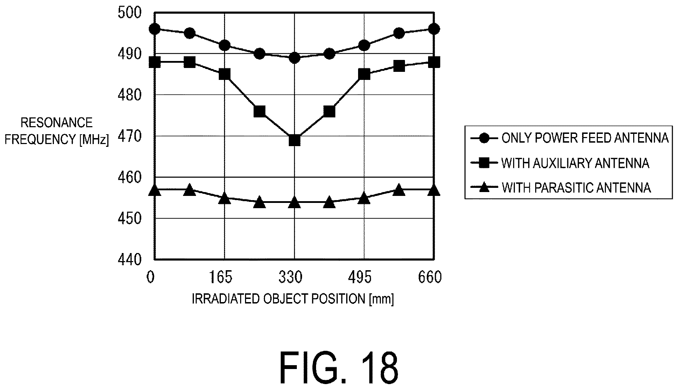

FIG. 18 illustrates a change in resonance frequency when one irradiated object 90 is conveyed. In any case of the three patterns of antenna configurations, the irradiated object 90 had the lowest resonance frequency at the center position of the main housing 81 and the highest resonance frequency at the end of the main housing 81. In the case of only the power feed antenna 40, the maximum value of the resonance frequency was 496 MHz, the minimum value was 489 MHz, and the fluctuation range was 7 MHz. In the case of using the auxiliary antenna 56, the maximum value of the resonance frequency was 488 MHz, the minimum value was 469 MHz, and the fluctuation range was 19 MHz. In the case of using the parasitic antenna 50, the maximum value of the resonance frequency was 457 MHz, the minimum value was 454 MHz, and the fluctuation range was 3 MHz. That is, in the case of using the auxiliary antenna 56, the fluctuation range of the resonance frequency associated with the conveyance was larger than that in the case of using only the power feed antenna 40. On the other hand, in the case of using the parasitic antenna 50, the fluctuation range of the resonance frequency associated with the conveyance was smaller than that in the case of using only the power feed antenna 40.

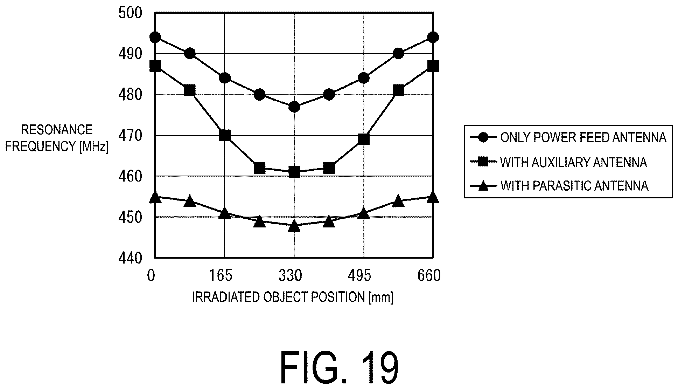

FIG. 19 illustrates a change in resonance frequency when three irradiated objects 90 are conveyed. In any case of the three patterns of antenna configurations, the irradiated object 90 had the lowest resonance frequency at the center position of the main housing 81 and the highest resonance frequency at the end of the main housing 81. In the case of only the power feed antenna 40, the maximum value of the resonance frequency was 494 MHz, the minimum value was 477 MHz, and the fluctuation range was 17 MHz. In the case of using the auxiliary antenna 56, the maximum value of the resonance frequency was 487 MHz, the minimum value was 461 MHz, and the fluctuation range was 26 MHz. In the case of using the parasitic antenna 50, the maximum value of the resonance frequency was 455 MHz, the minimum value was 448 MHz, and the fluctuation range was 7 MHz. That is, also in the case of the three irradiated objects 90, similarly to the case of the one irradiated object 90, in the case of using the auxiliary antenna 56, the fluctuation range of the resonance frequency associated with the conveyance was larger than that in the case of using only the power feed antenna 40. On the other hand, in the case of using the parasitic antenna 50, the fluctuation range of the resonance frequency associated with the conveyance was smaller than that in the case of using only the power feed antenna 40.

It has been confirmed that use of the parasitic antenna 50 enables not only adjustment of the resonance frequency but also suppression of the fluctuation of the resonance frequency associated with conveyance. Therefore, it has become clear that use of the parasitic antenna 50 makes the adjustment range of the output frequency of the microwave oscillator 10 small, and enables irradiation with the output frequency fixed.

Application of Microwave Irradiation Device

The microwave irradiation device 1 according to each of the above-described embodiments can be incorporated in a processing device for various applications or configured in an appropriate aspect. For example, in a case of being used for heat sterilization of a hermetically packaged food, the microwave irradiation device 1 is incorporated in a device configured to pressurize the irradiated object 90 that is a hermetically packaged food or to keep the irradiated object warm for a time required for sterilization. In addition, the microwave irradiation device 1 can be used for manufacturing of food including accommodating a food in a package container and hermetically sealing this package container to obtain a packaged food, and heating this package container food using the microwave irradiation device 1.

Although the present invention has been described above with reference to the preferred embodiments, the present invention is not limited only to the embodiments described above, and various modifications can be made within the scope of the present invention.

In the embodiments described above, the shape and size of the parasitic antenna 50 are similar to those of the power feed antenna 40, but no such limitation is intended. For example, since the resonance frequency decreases as the diameter of the parasitic loop antenna increases and the resonance frequency increases as the diameter decreases, the size of the parasitic antenna 50 may be changed so as to achieve a necessary frequency band.

In each of the above-described embodiments, an example in which the reference axis that is the directional irradiation axis of the power feed antenna 40 is horizontal has been described, but no such limitation is intended. The reference axis may be provided, for example, vertically or inclined with respect to the horizon. For example, the power feed antenna 40 and the parasitic antenna 50 may be provided so as to hold from above and below the irradiated object 90 conveyed horizontally by the conveyance device 85, and the irradiated object 90 may be irradiated with microwaves from above, below, or both using the power feed antenna 40. The conveyance device 85 may convey the irradiated object 90 in the vertical direction. For example, as the power feed antenna 40 and the parasitic antenna 50, a loop antenna may be provided with the reference axis being vertical and the opening surface being horizontal, and the microwave irradiation device 1 may be configured such that the irradiated object 90 conveyed by the conveyance device 85 passes through these loop antennas in the vertical direction. The microwave irradiation device 1 may be configured such that irradiated object 90 is conveyed in the vertical direction by the conveyance device 85, and passes through between the antenna and the antenna arranged with the reference axis being horizontal. In this manner, the reference axis, the conveyance direction, and the like can be arbitrarily set.

Reference Signs List

1 Microwave irradiation device
10 Oscillator
21 Coaxial cable
40 Power feed antenna
41 First power feed loop antenna
42 Second power feed loop antenna
50 Parasitic antenna
51 First parasitic loop antenna
52 Second parasitic loop antenna
56 Auxiliary antenna
60 Position adjustment mechanism
61 Control unit
62 Support portion
63 Rail

80 Metal housing
81 Main housing
82 Side housing
85 Conveyance device
86 Belt
90 Irradiated object

**Claims**

1. The microwave irradiation device comprising:

   a retainer configured to retain an irradiated object at a retaining position;
   a power feed tool configured to be electrically conductive with an oscillator;
   a power feed antenna configured to emit a microwave by power feed through conduction via the power feed tool, the power feed antenna having directivity and being arranged with an irradiation axis facing the retaining position; and
   a parasitic antenna that has directivity but is not fed with power, the parasitic antenna being arranged to face the power feed antenna across the retaining position and having an irradiation axis facing the retaining position.

2. The microwave irradiation device according to claim 1, further comprising:
   a position adjustment mechanism configured to change a relative distance between the parasitic antenna and the power feed antenna.

3. The microwave irradiation device according to claim 2, wherein
   the position adjustment mechanism is configured to change a position of the parasitic antenna.

4. The microwave irradiation device according to any one of claims 1 to 3, further comprising:
   an additional power feed antenna configured to emit a microwave by power feed through conduction via the power feed tool, the additional power feed antenna having directivity and being arranged with an irradiation axis facing the retaining position.

5. The microwave irradiation device according to claim 4, further comprising:
   an additional parasitic antenna that has directivity but is not fed with power, the additional parasitic antenna being arranged to face the additional power feed antenna across the retaining position and having an irradiation axis facing the retaining position.

6. The microwave irradiation device according to claim 5, comprising:
   a position adjustment mechanism configured to change a position of the additional parasitic antenna.

7. The microwave irradiation device according to any one of claims 1 to 6, wherein
   the power feed antenna or the parasitic antenna is a loop antenna.

8. The microwave irradiation device according to claim 7, wherein
   the retainer is provided to penetrate the loop antenna.

9. The microwave irradiation device according to any one of claims 1 to 8, wherein
   the retainer includes a conveyance device configured to convey the irradiated object.

10. A microwave irradiation method comprising:
    irradiating an irradiated object with a microwave by feeding power to one antenna and not feeding power to another antenna, of directional antennas arranged to face each other across the irradiated object with an irradiation axis being directed to the irradiated object.

11. The microwave irradiation method according to claim 10, further comprising:
    adjusting impedance by changing an interval between the directional antennas arranged to face each other.

12. The microwave irradiation method according to claim 11, wherein
    adjusting the impedance includes not moving the one antenna fed with power but moving the other antenna not fed with power, of the directional antennas arranged to face each other.

13. A method for manufacturing food, comprising:
    heating a food using the microwave irradiation method according to any one of claims 10 to 12.

14. The method for manufacturing food according to claim 13, wherein
    the food is a package container food.

15. The method for manufacturing food according to claim 14, further comprising: obtaining the package container food by accommodating the food in a package container, and hermetically sealing the package container.

FIG. 1

FIG. 2A

FIG. 2B

FIG. 3A

# FIG. 3B

FIG. 3C

FIG. 4

FIG. 5

FIG. 6

FIG. 7

FIG. 8

RESONANCE
FREQUENCY [MHz]

520
510
500
490
480
470
460
450
440
430
420

0    42    83    125    167    208    250    292    333

PARASITIC ANTENNA POSITION [mm]

FIG. 9

# FIG. 10

FIG. 11

| | CASE WHERE IMPEDANCE MATCHING IS PERFORMED IN STATE IN WHICH IRRADIATED OBJECT IS ARRANGED BETWEEN POWER FEED ANTENNA AND PARASITIC ANTENNA | CASE WHERE IMPEDANCE MATCHING IS PERFORMED IN STATE IN WHICH IRRADIATED OBJECT IS NOT ARRANGED BETWEEN POWER FEED ANTENNA AND PARASITIC ANTENNA |
|---|---|---|
| SET POSITION OF RESONANCE FREQUENCY | RESONANCE FREQUENCY: 427 MHz, RETURN LOSS: -12 dB | RESONANCE FREQUENCY: 432 MHz, RETURN LOSS: -12 dB |
| STATE IN WHICH SPACE BETWEEN ANTENNAS IS FILLED WITH IRRADIATED OBJECT | RETURN LOSS OF -18 dB AT FREQUENCY OF 427 MHz | RETURN LOSS OF -4.4 dB AT FREQUENCY OF 432 MHz |

FIG. 12

FIG. 13

FIG. 14

FIG. 15

FIG. 16

| | (a) ONLY POWER FEED ANTENNA | (b) AUXILIARY ANTENNA | (c) 2 PARASITIC ANTENNAS (GAP UPPER SIDE) | (d) 2 PARASITIC ANTENNAS (GAP UPPER SIDE AND LOWER SIDE) |
|---|---|---|---|---|
| RESONANCE FREQUENCY | 490 MHz | 450 MHz | 450 MHz | 450 MHz |
| ANALYSIS MODEL | | | | |
| TEMPERATURE DISTRIBUTION y-z PLANE CROSS SECTION | | | | |

FIG. 17

EP 4 557 890 A1

FIG. 18

FIG. 19

## INTERNATIONAL SEARCH REPORT

International application No.

**PCT/JP2023/020122**

### A. CLASSIFICATION OF SUBJECT MATTER

***H05B 6/72***(2006.01)i; ***H05B 6/64***(2006.01)i; ***H05B 6/74***(2006.01)i
FI: H05B6/72 C; H05B6/64 D; H05B6/74 E; H05B6/74 F

According to International Patent Classification (IPC) or to both national classification and IPC

### B. FIELDS SEARCHED

Minimum documentation searched (classification system followed by classification symbols)

H05B6/46-6/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-346931 A (TOKYO UNIV. OF SCIENCE) 15 December 2005 (2005-12-15) paragraphs [0021], [0023], [0029]-[0033], fig. 8-9 | 1-8, 10-15 |
| Y | | 9 |
| Y | JP 2009-100675 A (DAIWA CAN CO., LTD.) 14 May 2009 (2009-05-14) paragraph [0003] | 9 |
| A | WO 2022/130915 A1 (MURATA MANUFACTURING CO., LTD.) 23 June 2022 (2022-06-23) entire text, all drawings | 1-15 |
| A | JP 2019-087410 A (NATIONAL INST. OF ADVANCED INDUSTRIAL SCIENCE AND TECHNOLOGY) 06 June 2019 (2019-06-06) entire text, all drawings | 1-15 |
| A | WO 2013/159815 A1 (ANTRAD MEDICAL AB) 31 October 2013 (2013-10-31) entire text, all drawings | 1-15 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/020122**

| Patent document cited in search report | | | Publication date (day/month/year) | Patent family member(s) | Publication date (day/month/year) |
|---|---|---|---|---|---|
| JP | 2005-346931 | A | 15 December 2005 | (Family: none) | |
| JP | 2009-100675 | A | 14 May 2009 | (Family: none) | |
| WO | 2022/130915 | A1 | 23 June 2022 | (Family: none) | |
| JP | 2019-087410 | A | 06 June 2019 | (Family: none) | |
| WO | 2013/159815 | A1 | 31 October 2013 | (Family: none) | |

Form PCT/ISA/210 (patent family annex) (January 2015)

**REFERENCES CITED IN THE DESCRIPTION**

**Patent documents cited in the description**

- JP 2019003868 A